# FASCICULE DE BREVET EUROPEEN

(11) **EP 0 762 855 B1**
(45) Date de publication et mention de la délivrance du brevet: **11.08.1999**
(21) Numéro de dépôt: 95920992.5
(22) Date de dépôt: 29.05.1995
(51) Int. Cl.: A61C 8/00

(54) **MATERIAL D'IMPLANT DENTAIRE ET DISPOSITIF POUR SA MISE EN PLACE**
ZAHNIMPLANTAT MIT VORRICHTUNG ZU SEINER EINSETZUNG
DENTAL IMPLANT MATERIAL AND POSITIONING DEVICE

(30) Priorité: 31.05.1994 FR 9406593
(43) Date de publication de la demande: 19.03.1997
(73) Titulaire: Bompard, Bruno, 75015 Paris (FR); Mauduech, Elisabeth, 75015 Paris (FR)
(72) Inventeur: Bompard, Bruno, 75015 Paris (FR); Mauduech, Elisabeth, 75015 Paris (FR)
(74) Mandataire: Bernasconi, Jean
(86) Numéro de dépôt international: FR9500692
(87) Numéro de publication internationale: WO9532682

(56) Documents cités:
- US-A- 3 919 772
- US-A- 3 981 079

## Description

La présente invention concerne les implants dentaires et, plus particulièrement, un matériel d'implant dentaire comportant un corps d'implant destiné à être mis en place dans une cavité sensiblement verticale forée dans l'os maxillaire à partir de la face supérieure (ou crête osseuse) de ce dernier.

L'invention concerne également un dispositif spécialement conçu pour la mise en place dudit matériel d'implant dentaire.

Les matériels d'implants utilisés actuellement consistent en un corps d'implant de forme cylindrique, mis en place par simple insertion ou par vissage, dans l'os maxillaire dans l'axe naturel des dents après forage d'un puits (ou cavité) de la dimension de l'implant.

De tels implants ont cependant des durées de vie limitées en raison, d'une part de l'anatomie des os maxillaires (ces os étant formés d'une couche superficielle d'os dur appelée corticale, entourant une zone d'os spongieux beaucoup plus tendre) et, d'autre part des contraintes mécaniques importantes appliquées sur ladite corticale, par ces implants du fait de la mastication.

Dans le but d'augmenter la durée de vie des implants, on a déjà proposé un matériel d'implant conçu pour la réalisation d'implants en T ou en croix. Ce matériel comprend une plaque en matière plastique fluorée qui est insérée latéralement dans l'os par une cavité parallèle à la crête gingivale creusée préalablement, et un corps d'implant en forme de tige destinée à être inséré axialement dans un puits osseux que l'on aura également préalablement creusé dans l'os maxillaire. Ce puits est positionné de telle sorte que ladite plaque le traverse. Cette dernière possède un taraudage pratiqué en son milieu. Le corps d'implant est vissé dans ledit taraudage.

Cet implant en T, en raison de la prise d'appui sur la corticale supérieure, ainsi que sur les corticales intérieures et extérieures qu'il offre, présente l'avantage d'offrir une surface d'appui sur l'os dur accrue ce qui permet de minimiser les pressions exercées sur cette corticale par l'implant lors de la mastication. Néanmoins, étant donné la nécessité de réaliser les tranchées latérales dont l'étendue doit être suffisante pour permettre le passage de la plaque transversale, la mise en place de cet implant connu est compliquée, imprécise et surtout très mutilante pour l'os.

En outre cette conception d'implant n'est pas applicable aux implants de faibles dimensions, aux cas où un implant doit être installé dans un os de faible volume ou de faible densité.

Dans le brevet US-A-3 981 079, qui expose les caractéristiques du préambule de la revendication 1 et de la revendication 10, on a également proposé, pour résoudre les inconvénients de différents moyens d'accrochage latéral d'un implant dans l'os maxillaire, de réaliser, dans l'implant, un ou plusieurs passages transversaux taraudés à travers lesquels on visse des tiges filetées autotaraudantes. A cette fin on solidarise provisoirement un gabarit de perçage à l'implant, et l'on fore à travers l'os un trou prolongeant ledit passage de part et d'autre de l'implant, après quoi on visse la tige filetée dans le trou et à travers le passage taraudé. Cette solution est de mise en oeuvre difficile et necessiterait une multiplicité de gabarits. Mais surtout elle est extrèmement nécrosante pour l'os et ne paraît pas avoir été mise en pratique.

L'invention remédie à ces inconvénients et a notamment pour but de proposer un matériel d'implant pour réaliser un implant qui, tout en prenant appui sur les corticales supérieure et latérales, évite le forage de cavités de dimensions importantes dans le sens transversal aux axes dentaires.

Ce but est atteint, conformément à l'invention, par un matériel d'implant dentaire comportant un corps d'implant destiné à être mis en place dans une cavité sensiblement verticale forée dans un os maxillaire à partir de la face supérieure de ce dernier, muni d'au moins un passage sensiblement transversal à son axe, ledit matériel comportant en outre au moins une clavette allongée reçue dans ledit passage du corps d'implant, cette clavette étant destinée à être mise en place dans l'os maxillaire préalablement muni dudit corps d'implant, caractérisé en ce que ladite clavette présente une forme cylindrique lisse de section droite et en ce que ledit passage est un alésage correspondant sensiblement à ladite section droite de la clavette cylindrique.

Ainsi, la mise en place de l'implant réalisé au moyen du matériel d'implant selon l'invention ne nécessite que le perçage de trous latéraux de petite diamètre pour le passage de la clavette, alors que cet implant présente lui aussi l'avantage de prendre appui tout à la fois sur la corticale supérieure (par le corps d'implant) et sur les corticales latérales (par la clavette) et le corps d'implant.

En outre, la liaison mécanique entre le corps d'implant et l'élément transversal (la clavette) étant une liaison par traversée dans la masse de l'une des pièces (la clavette) dans l'autre (le corps d'implant), ledit corps d'implant est de ce fait solidement immobilisé en rotation autour de son axe (qui correspond à l'axe du puits dans lequel il est logé); en d'autres termes, le corps d'implant ne peut subir un pivotement sur lui-même.

Par ailleurs, le matériel d'implant selon l'invention offre au praticien la possibilité de s'adapter au contexte osseux qu'il rencontre, en vue d'obtenir le meilleur résultat quant à la qualité de l'appui. Il peut, par exemple faire en sorte que la clavette traverse une épaisseur d'os compact maximale en choisissant convenablement l'orientation angulaire du corps d'implant (et donc celle de l'alésage dont ce dernier est pourvu) par rapport à l'os maxillaire. La clavette, étant lisse, coulisse facilement dans les trous préalablement forés dans l'os et dans, ou à travers l'alésage transversal prévu dans l'implant.

Toutes ces considérations font que le matériel d'implant selon l'invention permet tout à la fois, une extension des indications aux implants de faibles dimensions, ainsi qu'aux cas d'os de faible volume ou densité, une mise en charge de l'implant qui peut être plus rapide, une durée de vie des implants plus longue, une utilisation éventuelle du clavetage pour ménager l'espace nécessaire à une membrane artificielle qui serait utilisée dans la régénération osseuse guidée du site de l'implantation, une immobilisation solide d'implant utilisable immédiatement dans un site d'extraction dentaire, des conditions d'ostéo-intégration particulièrement favorables.

Il est avantageux que l'alésage du corps d'implant soit un alésage traversant de part en part ledit corps d'implant, et que la clavette soit dimensionnée de manière à s'étendre de la corticale extérieure à la corticale intérieure.

Afin de permettre au praticien de s'adapter à la morphologie de son patient, il est avantageux de mettre à sa disposition un jeu de plusieurs clavettes de sections droites de mêmes dimension et forme, mais de longueurs différentes. Le praticien pourra ainsi choisir parmi ces clavettes celle dont la longueur correspond sensiblement à l'épaisseur de l'os maxillaire mesurée dans le sens horizontal.

Selon un mode de réalisation préféré de l'invention, on utilise plusieurs clavettes pour réaliser un implant, le corps d'implant étant muni de plusieurs alésages pouvant être orientés suivant des directions parallèles, ou au contraire différentes et situés dans différents plans transversaux à l'axe de l'implant de manière à ne pas se rencontrer.

L'invention concerne aussi un appareillage particulier pour la mise en place dans les os maxillaires, du matériel d'implant dentaire selon l'invention. Cet appareillage comporte, conformément à l'invention, un organe de positionnement conçu spécialement pour être fixé sur le corps d'implant avec un positionnement par rapport à ce dernier particulièrement précis tout en pouvant être réglé latéralement par rapport à l'os dans lequel est logé l'implant, et donc par rapport à l'implant, de façon à pouvoir être appliqué, de préférence par coulissement, contre l'os à forer. Cet organe de positionnement a pour fonction de servir de support pour un gabarit de perçage destiné à guider, par rapport au corps d'implant, la perceuse que l'on va utiliser pour percer le ou les trous latéraux destinés à l'implantation de la (ou des) clavette(s).

Le positionnement et la fixation de cet organe de positionnement sur l'implant peuvent être avantageusement réalisés en utilisant les moyens de positionnement et de fixation déjà prévus sur l'implant pour recevoir la prothèse destinée à être fixée sur l'implant.

Selon un mode de réalisation actuellement préféré, l'organe de positionnement est réalisé sous la forme d'un tube d'axe rectiligne, ouvert aux deux extrémités. Il comporte une partie d'extrémité ayant une section droite conformée et dimensionnée pour s'ajuster dans un évidement axial de section correspondante, ouvert vers le haut, ménagé dans le corps d'implant. Ladite partie d'extrémité comporte sur l'une de ses faces un relief, saillie ou évidement destiné à coopérer avec un relief, évidement (ou saillie) de forme correspondante prévu dans la paroi de l'évidement du corps d'implant. Cette dernière disposition joue un rôle de "détrompeur", évitant toute erreur de positionnement angulaire entre le tube de positionnement et le corps d'implant.

Dans son évidement, le tube de positionnement présente une surface conique d'appui pour la tête fraisée d'une vis dont le fût fileté dépasse à l'extérieur du tube, à l'extrémité comportant, par exemple une partie polygonale. Ce fût fileté est destiné à se visser dans un alésage axial borgne taraudé correspondant ménagé dans le corps d'implant à la suite dudit évidement de section polygonale. Il est avantageux de rendre la vis imperdable en prévoyant dans la paroi interne du tube de positionnement une déformation réalisant une butée empêchant la sortie de la tête de vis à l'extérieur dudit tube.

Toujours selon ce mode de réalisation préféré, l'organe tubulaire de positionnement comporte des trous transversaux à son axe, destinés à recevoir à coulissement mais sans jeu des tenons (ou tiges) de positionnement du gabarit de perçage. Ce dernier possède en outre un passage ou perçage destiné à servir de guide au foret de perçage des trous latéraux des os maxillaires. Ce perçage est, avantageusement, d'axe parallèle auxdits tenons de positionnement.

De préférence ce passage est pratiqué dans un élément tubulaire dont l'extrémité libre est chanfreinée de façon à pouvoir traverser la gencive et s'appliquer directement contre la partie verticale de l'os.

D'autres avantages et caractéristiques de l'invention ressortiront à la lecture de la description qui va suivre de deux modes de réalisation, description faite en référence aux dessins annexés dans lesquels :
- la figure 1 est une vue en élévation et en coupe verticale selon le plan I-I de la figure 2, d'un corps d'implant et d'une clavette en position de montage, selon un mode de réalisation de l'invention ;
- la figure 2 est une vue de dessus du corps d'implant de la figure 1 ;
- la figure 3 est une vue en élévation et en demi coupe longitudinale, selon un plan correspondant au plan III-III de la figure 2, d'un tube de positionnement sur lequel est monté en position de travail un gabarit de perçage, ces éléments étant représentés à une échelle légèrement réduite par rapport à celle de la représentation du corps d'implant et de la clavette sur les figures 1 et 2 ; et
- la figure 4 est une vue en élévation d'un gabarit de positionnement selon une réalisation perfectionnée de l'invention.

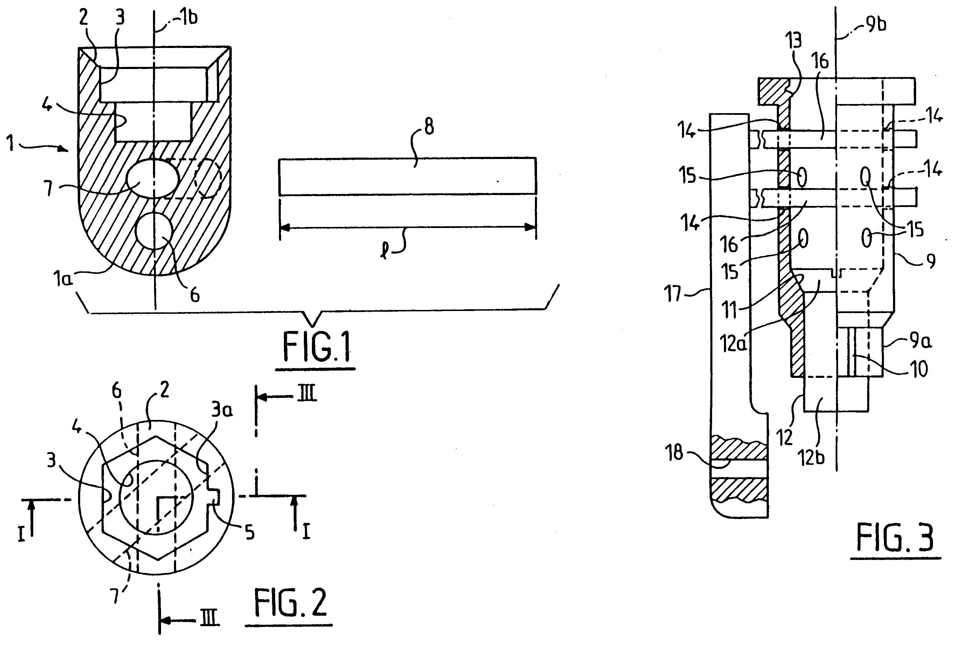

Le corps d' implant 1 représenté sur les figures 1 et 2 présente une forme cylindrique de section circulaire. L'extrémité inférieure la du corps est arrondie, par exemple de forme hémi sphérique.

L'extrémité supérieure de l'implant 1 présente un évidement axial borgne ouvert vers le haut se composant de trois tronçons contigus successifs, soit de haut en bas: un évasement conique 2, un tronçon cylindrique de section hexagonale régulière 3, et un tronçon cylindrique de section circulaire taraudé 4.

L'une des faces 3a du tronçon hexagonal 3 est munie d'une rainure axiale 5 dont le rôle sera expliqué plus loin.

La partie inférieure du corps 1 comporte deux alésages traversants 6 et 7 dont les axes sont perpendiculaires à l'axe 1b du corps 1. Les alésages 6 et 7 qui sont situés à des hauteurs différentes et ont des orientations angulaires différentes l'un de l'autre, sont destinés à recevoir chacun une clavette 8 représentée en position de montage sur la figure 1.

La clavette 8 présente une longueur l suffisante pour s'etendre depuis la corticale extérieure jusqu'à la corticale intérieure, en passant par un alésage 6, 7 du corps 1.

Afin de permettre au praticien de s'adapter à la morphologie de son patient, il est avantageux de mettre à sa disposition un jeu de plusieurs clavettes de mêmes dimensions transversales, mais de longueurs différentes. Le praticien pourra ainsi choisir parmi ces clavettes celle dont la longueur correspond sensiblement à l'épaisseur des os maxillaires mesurée dans le sens horizontal.

L'évidement 2, 3, 4 du corps 1 est bien entendu destiné à recevoir des pièces ou prothèses connues en soi. Dans le cadre de la présente invention, cet évidement a été spécialement conçu pour pouvoir recevoir un dispositif d'alignement et de gabarit de perçage qui va maintenant être décrit en référence à la figure 3.

Comme on peut le voir sur la figure 3, le dispositif d'alignement et de gabarit de perçage comprend une pièce tubulaire d'alignement d'axe rectiligne, ouverte aux deux extrémités 9. La pièce 9 comporte une partie d'extrémité 9a ayant une section droite polygonale régulière, cette partie étant conformée et dimensionnée pour s'ajuster dans l'évidement axial de section polygonale correspondante 3 ménagé dans le corps d'implant 1.

La partie d'extrémité 9a comporte sur l'une de ses faces une nervure 10 destinée à s'engager dans la rainure 5 de forme correspondante prévue dans la face 3a de l'évidement polygonal 3 du corps d'implant 1. Cette coopération entre les organes 5 et 10 permet un repérage de la position angulaire de la pièce 9 par rapport au corps 1, réalisant ainsi un "détrompeur" permettant d'éviter toute erreur de positionnement angulaire entre le tube de positionnement 9 et le corps d'implant 1.

La paroi interne du tube de positionnement 9 présente une surface conique d'appui 11 pour la tête fraisée 12a d'une vis 12 dont le fût fileté 12b dépasse vers le bas à l'extérieur du tube 9, à l'extrémité comportant la partie polygonale 9a. Ce fût fileté 12b est destiné à se visser dans l'alésage axial borgne taraudé 4 ménagé dans le corps d'implant 1 à la suite de l'évidement de section polygonale 3.

La vis 12 est rendue imperdable en ménageant dans la paroi interne du tube de positionnement 9 une déformation 13 réalisant une butée empêchant la sortie de la tête de vis 12a à l'extérieur dudit tube 9.

L'organe tubulaire de positionnement 9 comporte deux ensembles de trous 14 et 15, transversaux à son axe 9b, destinés à recevoir sans jeu des tenons (ou tiges) de positionnement 16 d'un gabarit de perçage 17. Ce dernier possède en outre un alésage 18 destiné à servir de guide au foret d'une perceuse (non représentée) utilisée pour le perçage des trous latéraux de l'os maxillaire. Comme le montre la figure 3, l'alésage 18 est d'axe parallèle auxdits tenons de positionnement 16.

Chaque ensemble de trous 14, 15 correspond à la hauteur et à l'orientation correspondant aux alésages respectivement 6 et 7 du corps 1 mis en place dans l'os de la mâchoire. Le praticien utilise pour le perçage de l'os exclusivement l'alésage de guidage 18 qui est au diamètre de la clavette 8 et du foret. Le praticien doit utiliser alternativement les deux ensembles de trou 14 et 15, le coulissement des tenons 16 dans les trous 14 ou 15 permettant de mettre en place le gabarit 17 au plus près de l'os à perforer afin d'obtenir une plus grande précision et d'éviter ou de diminuer l'amplitude des vibrations du foret.

Dans la position représentée sur la figure 3, le gabarit 17 permet le perçage dans l'os maxillaire, qui comporte déjà le corps d'implant 1, d'un trou latéral en alignement avec l'alésage 7 du corps 1 (voir figure 2). Une fois ce trou percé, on place alors le gabarit 17 dans une deuxième position en dégageant les tenons 16 des trous 14 et en les introduisant dans les trous 15 du tube de positionnement 9. Dans cette nouvelle position du gabarit 17, l'alésage de guidage 18 est en alignement avec l'alésage 6 du corps 1 (voir figure 2).

Il est d'usage de commercialiser les implants avec porte-implant individuel dans un enrobage stérile. La pièce 9 munie de la vis 12 peut servir de porte implant et être ainsi livrée déjà montée sur le corps d'implant 1. Dans ce cas la nervure 10 et la rainure 5 deviennent inutiles.

Ainsi, la mise en place de l'implant réalisé au moyen du matériel d'implant selon l'invention ne nécessite que le perçage de trous latéraux de petit diamètre pour le passage de la clavette, alors que cet implant présente lui aussi l'avantage de prendre appui tout à la fois sur la corticale supérieure (par le corps d'implant) et sur les corticales latérales (par la clavette).

En outre, les liaisons mécaniques entre le corps d'implant et les éléments transversaux (clavettes) étant une liaison par traversée dans la masse du corps d'implant, ledit corps d'implant est de ce fait solidement immobilisé en rotation autour de son axe (qui correspond à l'axe du puits dans lequel il est logé); en d'autres termes, le corps d'implant ne peut subir ni un changement d'orientation par rapport aux autres dents, ni un pivotement sur lui-même.

Par ailleurs, le matériel d'implant selon l'invention offre au praticien la possibilité de s'adapter au contexte osseux qu'il rencontre, en vue d'obtenir le meilleur résultat quant à la qualité de l'appui. Il peut, par exemple faire en sorte que la clavette traverse une épaisseur d'os compact maximale en choisissant convenablement l'orientation angulaire du corps d'implant (et donc celle de l'alésage dont ce dernier est pourvu) par rapport à l'os maxillaire.

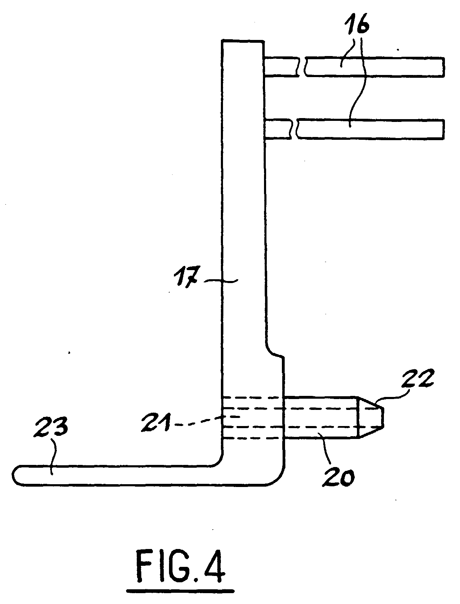

En se référant à la figure 4 on voit un gabarit 17, muni de ses deux ténons ou tiges coulissants 16 et présentant, vers son extrémité inférieure, à la place du passage 18, un élément tubulaire 20 dont la lumière 21 est équivalente au passage 18. L'extrémité libre du tube 20 présente un chanfrein 22 lui permettant de traverser la gencive de l'os maxillaire jusgu'à buter contre l'os. A cette fin on peut préalablement percer la gencive à l'aide d'un trocart guidé dans le passage 21. On assure ainsi une précision maximale du perçage de l'os. Le gabarit peut présenter une aile inférieure 23 servant d'écarteur pour écarter la joue du patient.

Bien entendu diverses modifications peuvent être apportées aux dispositifs qui viennent d'être décrits sans sortir pour cela du cadre de la définition de l'invention donnée par les revendications annexées.

## Revendications

1. Matériel d'implant dentaire comportant un corps d'implant (1) destiné à être mis en place dans une cavité sensiblement verticale forée dans un os maxillaire à partir de la face supérieure de ce dernier, muni d'au moins un passage (6, 7) sensiblement transversal à son axe (1b), ledit matériel comportant en outre au moins une clavette allongée reçue dans ledit passage (6, 7) du corps d'implant (1), cette clavette étant destinée à être mise en place dans l'os maxillaire préalablement muni dudit corps d'implant, caractérisé en ce que ladite clavette présente une forme cylindrique lisse de section droite et en ce que ledit passage (6, 7) est un alésage correspondant sensiblement à ladite section droite de la clavette cylindrique.

2. Matériel d'implant dentaire selon la revendication 1, caractérisé en ce que ledit alésage (6, 7) traverse de part en part ledit corps d'implant (1).

3. Matériel d'implant dentaire selon l'une des revendications 1 et 2, caractérisé en ce qu'il comprend plusieurs clavettes (8) et en ce que ledit corps d'implant (1) comporte plusieurs alésages (6,7) situés dans différents plans transversaux à l'axe (1b) de l'implant (1) de manière à ne pas se rencontrer, ces alésages (6, 7) étant destinés à recevoir chacun l'une desdites clavettes (8).

4. Matériel d'implant dentaire selon la revendication 3, caractérisé en ce que lesdits alésages (6, 7) sont orientés suivant des directions différentes ou parallèles.

5. Matériel d'implant dentaire selon l'une des revendications 1 à 4, caractérisé en ce que ledit corps d'implant (1) comporte, à son extrémité supérieure, des moyens d'alignement et de fixation (3, 4, 5) pour un élément de positionnement (9) destiné au montage et au positionnement d'un gabarit (17) de perçage de trou transversal dans l'os maxillaire pour ladite clavette (8).

6. Matériel d'implant dentaire selon la revendication 5, caractérisé en ce que lesdits moyens d'alignement et de fixation sont des moyens (3, 4) prévus pour la fixation d'une prothèse sur l'implant.

7. Matériel d'implant dentaire selon la revendication 6, caractérisé en ce que lesdits moyens d'alignement et de fixation comportent un moyen de détrompage, tel qu'un évidement ou d'une saillie de repérage angulaire (5).

8. Matériel d'implant dentaire selon l'une des revendications précédentes, caractérisé en ce qu'il comprend une pluralité de clavettes de même section droite et de longueurs différentes.

9. Matériel d'implant selon l'une des revendications 1 ou 3 à 8, caractérisé en ce qu'il comporte au moins une clavette cylindrique susceptible d'être fixée dans un alésage borgne (19) du corps d'implant.

10. Dispositif utilisable pour la mise en place dans l'os maxillaire, d'un matériau d'implant dentaire comprenant un implant dentaire avec un corps d'implant (1) destiné à être mis en place dans une cavité sensiblement verticale forée dans un os maxillaire à partir de la face supérieure de ce dernier, muni d'au moins un passage (6, 7) sensiblement transversal à son axe (1b) pour recevoir au moins une clavette allongée destinée à être mise en place dans l'os maxillaire préalablement muni dudit corps d'implant, ledit passage (6, 7) étant réalisé par un alésage correspondant sensiblement à ladite section droite de la clavette cylindrique, ledit corps d'implant comportant, à son extrémité supérieure, des moyens d'alignement et de fixation (3, 4, 5), ledit dispositif comprenant un gabarit de perçage (17) susceptible d'être solidarisé temporairement avec le corps d'implant grâce auxdits moyens d'alignement et de fixation (3, 4, 5), et présentant des moyens de guidage de perçage (18) pour une perceuse destinée à forer dans l'os maxillaire les trous latéraux pour la mise en place desdites clavettes caractérisé par un élément de positionnement (9) destiné à être aligné et fixé sur lesdits moyens d'alignement et de fixation et ayant des moyens de montage (9a, 11, 12) pour coopérer avec lesdits moyens d'alignement et de fixation (3, 4) du corps d'implant, ledit gabarit de perçage (17) ayant des moyens (16) pour son montage sur ledit élément de positionnement (9) et permettant de régler la position et la distance dudit gabarit de perçage (17) par rapport audit corps d'implant dentaire destiné à recevoir ladite au moins une clavette, laquelle présente une forme cylindrique lisse, de section droite.

11. Dispositif de mise en place selon la revendication 10 combinée avec la revendication 6, caractérisé en ce que les moyens de montage de l'élément de positionnement (9) comprennent une vis imperdable (12) susceptible de se visser dans ledit taraudage borgne (4) du corps d'implant (1) et des moyens d'alignement (9a) de forme cylindrique à section correspondant à celle de ladite ouverture cylindrique (3) du corps d'implant (1).

12. Dispositif de mise en place selon l'une des revendications 10 et 11 combinées avec la revendication 6, caractérisé en ce que les moyens de montage du gabarit (17) comprennent des tenons (16) parallèles à l'axe des moyens de guidage de perçage (18), et en ce que l'élément de positionnement (9) comporte des mortaises de forme correspondante (14, 15) destinées à coopérer avec lesdits tenons (16), pour régler la position du gabarit.

13. Dispositif de mise en place selon l'une des revendications 10 à 12, caractérisé en ce que ledit gabarit présente un élément tubulaire (20) assurant le guidage de perçage, et dont l'extrémité libre (22) est chanfreinée pour pouvoir être appliquée contre l'os à percer.

14. Dispositif de mise en place selon l'une des revendications 9 à 13, caractérisé en ce qu'il comporte des moyens de détrompage (10) coopérant avec des moyens de détrompage (5) de l'implant.

## Claims

1. Dental implant material comprising an implant body (1) intended to be positioned in a substantially vertical cavity drilled in a maxillary bone from the upper side thereof, having at least one passage (6, 7) substantially at right angles to its axis (1b), said material further comprising at least one elongate pin accommodated in said passage (6, 7) of the implant body (1), said pin being adapted to be positioned in the maxillary bone which has previously been provided with said implant body, characterized in that the pin has a smooth cylindrical shape in cross section and in that the passage (6, 7) is a bore corresponding substantially to said cross section of the cylindrical pin.

2. Dental implant material according to claim 1, characterised in that the bore (6, 7) passes right through the implant body (1).

3. Dental implant material according to one of claims 1 and 2, characterised in that it comprises a plurality of pins (8) and in that the implant body (1) comprises a plurality of bores (6, 7) located in different planes at right angles to the axis (1b) of the implant (1) in such a way that they do not meet, these bores (6, 7) each being adapted to receive one of said pins (8).

4. Dental implant material according to claim 3, characterised in that the bores (6, 7) are oriented in different or parallel directions.

5. Dental implant material according to one of claims 1 to 4, characterised in that the implant body (1) comprises, at its upper end, aligning and fixing means (3,4,5) for a positioning element (9) intended for mounting and positioning a drilling template (17) for a transverse hole in the maxillary bone for said pin (8).

6. Dental implant material according to claim 5, characterised in that said aligning and fixing means are means (3,4) provided for fixing a prosthesis to the implant.

7. Dental implant material according to claim 6, characterised in that said aligning and fixing means comprise a locating member such as a recess or projection for angular location (5).

8. Dental implant material according to one of the preceding claims, characterised in that it comprises a plurality of pins of the same cross section and different lengths.

9. Implant material according to one of claims 1 or 3 to 8, characterised in that it comprises at least one cylindrical pin capable of being fixed in a blind bore (19) in the implant body.

10. Device which may be used for positioning, in the maxillary bone, a dental implant material comprising a dental implant with an implant body (1) adapted to be positioned in a substantially vertical cavity drilled in a maxillary bone from the upper side thereof, having at least one passage (6, 7) substantially at right angles to its axis (1b), for receiving at least one elongate pin adapted to be positioned in the maxillary bone which has previously been provided with said implant body, said passage (6, 7) being formed by a bore corresponding substantially to said cross section of the cylindrical pin, said implant body having, at its upper end, aligning and fixing means (3, 4, 5), said device comprising a drilling template (17) capable of being temporarily attached to the implant body by means of said aligning and fixing means (3,4,5) and having drill guiding means (18) for a drill adapted to drill the lateral holes for positioning said pins in the maxillary bone, characterised by a positioning element(9)adapted to be aligned and fixed on said aligning and fixing means and having mounting means (9a,11,12) for co-operating with said aligning and fixing means (3, 4) of the implant body, said drilling template (17) having means (16) for mounting it on said positioning element (9) and making it possible to regulate the position and distance of said drilling template (17) from said dental implant body adapted to receive the pin or pins, which is or are smoothly cylindrical in cross section.

11. Positioning device according to claim 10 combined with claim 6, characterised in that the mounting means for the positioning element (9) comprise a captive screw (12) capable of being screwed into said blind thread (4) of the implant body (1) and cylindrical aligning means (9a) corresponding in section to the cylindrical opening (3) in the implant body (1).

12. Positioning device according to one of claims 10 and 11 combined with claim 6, characterised in that the mounting means of the template (17) comprise tenons (16) parallel to the axis of the drill guiding means (18), and in that the positioning element (9) comprises correspondingly shaped mortises (14, 15) adapted to co-operate with said tenons (16), in order to regulate the position of the template.

13. Positioning device according to one of claims 10 to 12, characterised in that the template has a tubular member (20) for guiding the drilling, the free end (22) of which is chamfered so that it can be pressed against the bone which is to be drilled.

14. Positioning device according to one of claims 9 to 13, characterised in that it comprises locating means (10) co-operating with locating means (5) on the implant.

## Patentansprüche

1. Zahnimplantatmaterial mit einem Implantatkörper (1), der dazu bestimmt ist, in einer im wesentlichen vertikalen Eintiefung angeordnet zu werden, die in einen Kieferknochen ausgehend von der Oberseite desselben gebohrt ist, wobei der Implantatkörper mit zumindest einer Passage (6, 7) im wesentlichen quer zu seiner Achse (1b) versehen ist, wobei das Material außerdem zumindest einen langgestreckten Keil umfaßt, der in der Passage (6, 7) des Implantatkörpers (1) aufgenommen ist, wobei der Keil dazu bestimmt ist, in dem Kieferknochen plaziert zu werden, der vorausgehend mit dem Implantatkörper versehen wurde, dadurch gekennzeichnet, daß der Keil eine glatte Zylinderform mit geradem Profil aufweist, und daß die Passage (6, 7) eine Bohrung im wesentlichen entsprechend dem Profil des zylindrischen Keils ist.

2. Zahnimplantatmaterial nach Anspruch 1, dadurch gekennzeichnet, daß die Bohrung (6, 7) den Implantatkörper (1) vollständig quert.

3. Zahnimplantatmaterial nach einem der Ansprüche 1 und 2, dadurch gekennzeichnet, daß es mehrere Keile (8) umfaßt, und daß der Implantatkörper (1) mehrere Bohrungen (6, 7) aufweist, die in verschiedenen Ebenen quer zur Achse (1b) des Implantats (1) derart angeordnet sind, daß sie sich nicht treffen, wobei die Bohrungen (6, 7) dazu bestimmt sind, jeweils einen der Keile (8) aufzunehmen.

4. Zahnimplantatmaterial nach Anspruch 3, dadurch gekennzeichnet, daß die Bohrungen (6, 7) in unterschiedlichen Richtungen oder parallel ausgerichtet sind.

5. Zahnimplantatmaterial nach einem der Ansprüche 1 bis 4, dadurch gekennzeichnet, daß der Implantatkörper (1) an seinem oberen Ende eine Einrichtung (3, 4, 5) zum Ausrichten und zur Fixierung eines Positionierungselements (9) umfaßt, das zur Montage und zur Positionierung einer Bohrschablone (17) für das Querloch in dem Kieferknochen für den Keil (8) bestimmt ist.

6. Zahnimplantatmaterial nach Anspruch 5, dadurch gekennzeichnet, daß die Einrichtung zum Ausrichten und zur Fixierung eine Einrichtung (3, 4) ist, die zur Befestigung in einer Prothese auf dem Implantat bestimmt ist.

7. Zahnimplantatmaterial nach Anspruch 6, dadurch gekennzeichnet, daß die Einrichtung zum Ausrichten und zur Fixierung eine Unverwechselbarkeitseinrichtung umfaßt, wie etwa eine Aussparung oder einen Vorsprung (5) zur winkelmäßigen Stellungsfestlegung.

8. Zahnimplantatmaterial nach einem der vorangehenden Ansprüche, dadurch gekennzeichnet, daß es mehrere Keile mit demselben Querschnitt und unterschiedlichen Längen umfaßt.

9. Zahnimplantatmaterial nach einem der Ansprüche 1 oder 3 bis 8, dadurch gekennzeichnet, daß es zumindest einen zylindrischen Keil umfaßt, der dazu dient, in einer Blindbohrung (19) des Implantatkörpers befestigt zu werden.

10. Vorrichtung zur Anordnung eines Zahnimplantatmaterials in einem Kieferknochen, wobei das Material ein Zahnimplantat mit einem Implantatkörper (1) aufweist, der dazu bestimmt ist, in einer im wesentlichen vertikalen Austiefung angeordnet zu werden, die in einen Kieferknochen ausgehend von der Oberseite desselben gebohrt ist, wobei der Implantatkörper mit zumindest einer Passage (6, 7) im wesentlichen quer zu seiner Achse (1b) versehen ist, um zumindest einen langgestreckten Keil aufzunehmen, der dazu bestimmt ist, in dem Kieferknochen angeordnet zu werden, der im voraus mit dem Implantatkörper versehen wurde, wobei die Passage (6, 7) durch eine Bohrung im wesentlichen entsprechend dem geraden Profil des zylindrischen Keils ausgelegt ist, wobei der Implantatkörper an seinem oberen Ende eine Einrichtung (3, 4, 5) zum Ausrichten und zur Befestigung umfaßt, wobei die Vorrichtung eine Bohrschablone (17) umfaßt, die dazu bestimmt ist, vorübergehend mit dem Implantatkörper dank der Einrichtung (3, 4, 5) zum Ausrichten und zur Befestigung fest verbunden zu werden, und eine Bohrungsführungseinrichtung (18) für eine Bohrmaschine aufweist, die dazu bestimmt ist, in den Kieferknochen seitliche Löcher zum Anordnen der Keile zu bohren, gekennzeichnet durch ein Positionierungselement (9), das dazu bestimmt ist, auf der Einrichtung zum Ausrichten und zur Befestigung ausgerichtet und befestigt zu werden, und eine Montageeinrichtung (9a, 11, 12) aufweist, um mit der Einrichtung (3, 4) zum Ausrichten und zur Befestigung des Implantatkörpers zusammenzuwirken, wobei die Bohrschablone (17) eine Einrichtung (16) für ihre Montage auf dem Positionierungselement (9) und zum Einstellenlassen der Position und des Abstands der Bohrschablone (17) relativ zum Zahnimplantatkörper aufweist, der dazu bestimmt ist, zumindest einen Keil aufzunehmen, der eine glatte zylindrische Form mit geradem Profil aufweist.

11. Anbringungsvorrichtung nach Anspruch 10 in Verbindung mit Anspruch 6, dadurch gekennzeichnet, daß die Montageeinrichtung für das Positionierungselement (9) eine unverlierbare Schraube (12) umfaßt, die dazu dient, in das Sackgewinde (4) des Implantatkörpers (1) geschraubt zu werden, und eine Einrichtung (9a) zum Ausrichten in zylindrischer Form mit einem Querschnitt entsprechend demjenigen der zylindrischen Öffnung (3) des Implantatkörpers (1).

12. Anbringungsvorrichtung nach Anspruch 10 und 11 in Verbindung mit dem Anspruch 6, dadurch gekennzeichnet, daß die Einrichtung zur Montage der Bohrschablone (17) zur Achse der Bohrungsführungseinrichtung (18) parallele Zapfen (16) umfaßt, und daß das Positionierungselement (9) hierzu komplementäre Zapfenlöcher (14, 15) aufweist, die dazu bestimmt sind, mit den Zapfen (16) zusammenzuwirken, um die Position der Schablone einzustellen.

13. Anbringungsvorrichtung nach einem der Ansprüche 10 bis 12, dadurch gekennzeichnet, daß die Schablone ein rohrförmiges Element (20) aufweist, welches die Führung des Bohrwerkzeugs sicherstellt, und dessen freies Ende (22) abgefast ist, um gegen den zu bohrenden Knochen angelegt zu werden.

14. Anbringungsvorrichtung nach einem der Ansprüche 9 bis 13, dadurch gekennzeichnet, daß sie eine Unverwechselbarkeitseinrichtung (10) umfaßt, die mit der Unverwechselbarkeitseinrichtung (5) des Implantats zusammenwirkt.
